(19) **Europäisches Patentamt European Patent Office Office européen des brevets**

(11) **EP 4 250 182 B1**

(12) **FASCICULE DE BREVET EUROPEEN**

(45) Date de publication et mention de la délivrance du brevet:
**29.07.2026 Bulletin 2026/31**

(21) Numéro de dépôt: **23161853.9**

(22) Date de dépôt: **14.03.2023**

(51) Classification Internationale des Brevets (IPC):
**G06N 3/0464** *(2023.01)* **G06N 3/063** *(2023.01)*

(52) Classification Coopérative des Brevets (CPC):
**G06N 3/063; G06F 15/16; G06F 17/16; G06N 3/045; G06N 3/0464**

(54) **PROCEDE DE TRAITEMENT DANS UN ACCELERATEUR DE RESEAU DE NEURONES CONVOLUTIFS ET ACCELERATEUR ASSOCIE**

VERARBEITUNGSVERFAHREN IN EINEM NEURONALEN FALTUNGSNETZWERKBESCHLEUNIGER UND BESCHLEUNIGER DAFÜR

PROCESSING METHOD IN CONVOLUTIONAL NEURAL NETWORK ACCELERATOR AND ASSOCIATED ACCELERATOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.03.2022 FR 2202559**

(43) Date de publication de la demande:
**27.09.2023 Bulletin 2023/39**

(73) Titulaire: **Commissariat à l'Energie Atomique et aux Energies Alternatives 75015 Paris (FR)**

(72) Inventeurs:
• **KRICHENE, Hana**
  **91191 GIF SUR YVETTE Cedex (FR)**
• **PHILIPPE, Jean-Marc**
  **91191 GIF SUR YVETTE (FR)**

(74) Mandataire: **Atout PI Laplace Immeuble Up On 25 Boulevard Romain Rolland CS 40072 75685 Paris Cedex 14 (FR)**

(56) Documents cités:
• XIAO SHANLIN ET AL: "NeuronLink: An Efficient Chip-to-Chip Interconnect for Large-Scale Neural Network Accelerators", IEEE TRANSACTIONS ON VERY LARGE SCALE INTEGRATION (VLSI) SYSTEMS., vol. 28, no. 9, 1 September 2020 (2020-09-01), PISCATAWAY, NJ, USA, pages 1966 - 1978, XP055927535, ISSN: 1063-8210, DOI: 10.1109/TVLSI.2020.3008185
• CHEN YU-HSIN ET AL: "Eyeriss v2: A Flexible Accelerator for Emerging Deep Neural Networks on Mobile Devices", IEEE JOURNAL ON EMERGING AND SELECTED TOPICS IN CIRCUITS AND SYSTEMS, IEEE, PISCATAWAY, NJ, USA, vol. 9, no. 2, 1 June 2019 (2019-06-01), pages 292 - 308, XP011729348, ISSN: 2156-3357, [retrieved on 20190610], DOI: 10.1109/JETCAS.2019.2910232
• ZIMMER BRIAN ET AL: "A 0.32-128 TOPS, Scalable Multi-Chip-Module-Based Deep Neural Network Inference Accelerator With Ground-Referenced Signaling in 16 nm", IEEE JOURNAL OF SOLID-STATE CIRCUITS, IEEE, USA, vol. 55, no. 4, 1 April 2020 (2020-04-01), pages 920 - 932, XP011780068, ISSN: 0018-9200, [retrieved on 20200325], DOI: 10.1109/JSSC.2019.2960488

## Description

**Domaine technique :**

L'invention se situe dans le domaine de l'intelligence artificielle et des réseaux de neurones profonds et plus particulièrement dans le domaine de l'accélération du calcul d'inférence par les réseaux de neurones convolutifs.

**Technique antérieure :**

Les algorithmes d'intelligence artificielle (IA) constituent actuellement un vaste domaine de recherche, car ils sont destinés à devenir des composants essentiels des applications de la prochaine génération, s'appuyant sur des processus intelligents pour prendre des décisions basées sur la connaissance de leur environnement, relativement par exemple à la détection d'objets tels que des piétons pour une voiture à conduite autonome ou la reconnaissance d'activité pour une montre intelligente de suivi de la santé. Cette connaissance est recueillie par des capteurs associés avec des algorithmes de détection et/ou de reconnaissance très performants.

En particulier, les réseaux de neurones profonds (DNN pour Deep Neural Network en anglais) et parmi eux, surtout les réseaux de neurones convolutifs (CNN pour Convolutional Neural Network en anglais - voir par exemple Y. Lecun et al. 1998. Gradient-based learning applied to document recognition. Proc. IEEE 86, 11 (Nov. 1998), 2278-2324) sont de bons candidats pour être intégrés dans de tels systèmes en raison de leurs excellentes performances dans les tâches de détection et de reconnaissance. Ils sont basés sur des couches de filtres qui effectuent l'extraction de caractéristiques, puis la classification. Ces opérations nécessitent beaucoup de calculs et de mémoire, et l'intégration de tels algorithmes dans les systèmes requiert l'utilisation d'accélérateurs. Ces accélérateurs sont des dispositifs électroniques qui calculent principalement en parallèle les opérations de multiplication-accumulation (MAC) qui sont nombreuses dans les algorithmes CNN. L'objectif de ces accélérateurs est d'améliorer les performances d'exécution des algorithmes CNN pour répondre aux contraintes applicatives et améliorer l'efficacité énergétique du système. Ils sont principalement basés sur un nombre élevé d'éléments de traitement impliquant des opérateurs optimisés pour l'exécution des MAC et une hiérarchie mémoire permettant un stockage efficace des données.

La plupart des accélérateurs matériels sont basés sur un réseau de processeurs élémentaires (Processing Elements - PEs) implémentant des MAC et utilisent des mémoires tampon locales pour stocker les données qui sont fréquemment réutilisées, comme les paramètres des filtres ou les données intermédiaires. Les communications entre les PE eux-mêmes et celles entre les PEs et la mémoire sont un aspect très important à considérer lors de la conception d'un accélérateur CNN. En effet, les algorithmes CNN ont un parallélisme intrinsèque élevé ainsi que des possibilités de réutilisation des données. L'infrastructure de communication sur puce doit donc être conçue avec soin pour exploiter le nombre élevé de PEs et les particularités des algorithmes CNN, qui permettent d'améliorer à la fois les performances et l'efficacité énergétique. Par exemple, le multicast ou le broadcast de données particulières dans le réseau de communication permettra aux PEs cibles de traiter simultanément différentes données avec le même filtre en utilisant une seule lecture mémoire.

XiaoShanlin ET AL: "NeuronLink: An Efficient Chip-to-Chip Interconnect for Large-Scale Neural Network Accelerators",IEEE TRANSACTIONS ON VERY LARGE SCALE INTEGRATION (VLSI) SYSTEMS., vol. 28, no. 9, pages 1966-1978, décrit un couplage de communications intra-puce et inter-puce pour accélérateurs de réseaux neuronaux.

Plusieurs facteurs ont contribué à limiter ou à complexifier l'évolutivité et la flexibilité des accélérateurs CNN existant sur le marché. Ces facteurs se manifestent à travers : (i) une bande passante limitée liée à l'absence d'un support de diffusion efficace, (ii) un surconsommation d'énergie lié à la taille de la mémoire (ex : 40% de la consommation d'énergie dans certaines architectures est induite par la mémoire) et au problème de mur de capacité mémoire (iii) ainsi qu'une réutilisation limitée des données et un besoin de support efficace pour le traitement des différents patterns de communication.

Il existe donc un besoin d'augmenter l'efficacité du traitement dans les accélérateurs de neurones des architectures CNN, tenant compte du nombre élevé du PEs et des particularités des algorithmes CNN.

Résumé de l'invention :

A cet effet, suivant un premier aspect, la présente invention décrit un procédé de traitement dans un accélérateur de réseau de neurones convolutifs comprenant une grille de blocs unitaires de traitement, chaque bloc unitaire de traitement comprenant un élément unitaire de calcul PE associé à un ensemble de mémoires locales respectives et effectuant des opérations de calcul parmi des multiplications et des accumulations de données stockées dans ses mémoires locales, suivant la revendication 1.

Lors de cycles respectifs de traitement cadencés par une horloge de l'accélérateur, des blocs unitaires de la grille reçoivent et/ou transmettent des données depuis ou à destination de blocs unitaires voisins dans la grille selon au moins une direction sélectionnée, en fonction desdites données, parmi au moins les directions verticale et horizontale dans la grille ;
lors desdits mêmes cycles, des blocs unitaires de la grille effectuent une desdites opérations de calcul relatives à des données stockées dans leur ensemble de mémoires locales lors d'au moins un cycle de traitement antérieur.

Un tel procédé permet de garantir un traitement flexible et de réduire la consommation d'énergie dans les architectures CNN comprenant un accélérateur.

Il offre un modèle d'exécution DataFlow distribuant, rassemblant et mettant à jour parmi les nombreux éléments de traitement distribués (PE), les opérandes et permet d'assurer différents degrés de parallélisme sur les différents types de données partagées (poids, Ifmaps et Psum) dans les CNNs, de réduire le coût des échanges de données sans dégrader les performances et enfin de faciliter le traitement de différents réseaux CNN et de différentes couches d'un même réseau (Conv2D, FC, PW, DW, Résiduel, etc.).

Dans des modes de réalisation, un tel procédé comprendra en outre l'une au moins des caractéristiques suivantes :

- au moins lors d'un desdits cycles de traitement :

    au moins un bloc unitaire de la grille reçoit des données depuis plusieurs blocs unitaires voisins dans la grille situés dans des directions distinctes par rapport audit bloc unitaire ; et/ou au moins au moins un bloc unitaire de la grille transmet des données à destination de plusieurs blocs unitaires voisins dans la grille selon des directions distinctes ;

- un bloc unitaire effectue une transmission de type sélectionné entre broadcast et multicast en fonction d'un en-tête du paquet à transmettre et selon lequel le bloc unitaire applique au moins une desdites règles :

    pour un paquet à transmettre en broadcast provenant d'un bloc voisin situé dans une direction donnée par rapport audit bloc devant effectuer la transmission, ledit bloc transmet le paquet au cours d'un cycle dans toutes les directions sauf celle dudit bloc voisin ; pour un paquet à transmettre en multicast : si le paquet vient du PE du bloc unitaire, le multicast mis en oeuvre par le bloc est bidirectionnel sinon le multicast mis en oeuvre par le bloc est unidirectionnel, dirigé à l'opposé du bloc de traitement voisin d'où provient ledit paquet ;

    les réceptions et/ou transmissions de données mises en oeuvre par un bloc unitaire de traitement sont mises en oeuvre par un bloc de routage compris dans ledit bloc unitaire, mettant en oeuvre des fonctions de routage parallèle de données lors d'un même cycle de traitement, en fonction de directions de communication associés aux données ; en cas d'au moins deux requêtes de transmission simultanées vers une même direction par un bloc unitaire lors d'un cycle de traitement, la priorité entre lesdites requêtes est arbitrée, la requête arbitrée prioritaire est transmise dans ladite direction et l'autre requête est mémorisée, puis transmise vers ladite direction à un cycle de traitement ultérieur.

Suivant un autre aspect, l'invention décrit un accélérateur de neurones convolutifs comprenant une grille de blocs unitaires de traitement et une horloge, chaque bloc unitaire de traitement comprenant un élément unitaire de calcul PE associé à un ensemble de mémoires locales respectives et adapté pour effectuer des opérations de calcul parmi des multiplications et des accumulations de données stockées dans ses mémoires locales, suivant la revendication 6.

Dans cet accélérateur, des blocs unitaires de la grille sont adaptés pour, lors de cycles respectifs de traitement cadencés par l'horloge de l'accélérateur, recevoir et/ou transmettre des données depuis ou à destination de blocs unitaires voisins dans la grille selon au moins une direction sélectionnée, en fonction desdites données, parmi au moins les directions verticale et horizontale dans la grille ; et des blocs unitaires de la grille sont adaptés pour, lors desdits mêmes cycles, effectuer une desdites opérations de calcul relatives à des données stockées dans leur ensemble de mémoires locales lors d'au moins un cycle de traitement antérieur.

Dans des modes de réalisation, un tel accélérateur comprendra en outre l'une au moins des caractéristiques suivantes :

- au moins lors d'un desdits cycles de traitement :

    au moins un bloc unitaire de la grille est adapté pour recevoir des données depuis plusieurs blocs unitaires voisins dans la grille situés dans des directions distinctes par rapport audit bloc unitaire ; et/ou au moins au moins un bloc unitaire de la grille est adapté pour transmettre des données à destination de plusieurs blocs unitaires voisins dans la grille selon des directions distinctes ;

- un bloc unitaire est adapté pour effectuer une transmission de type sélectionné entre broadcast et multicast en fonction d'un en-tête du paquet à transmettre et le bloc unitaire est adapté pour appliquer au moins une desdites règles :

    pour un paquet à transmettre en broadcast provenant d'un bloc 10 voisin situé dans une direction donnée par rapport audit bloc devant effectuer la transmission, ledit bloc transmet le paquet au cours d'un cycle dans toutes les directions sauf celle dudit bloc voisin ;

    pour un paquet à transmettre en multicast : si le paquet vient du PE du bloc unitaire, le multicast mis en œuvre par le bloc est bidirectionnel sinon le multicast mis en œuvre par le bloc est unidirectionnel, dirigé à l'opposé du bloc de traitement voisin d'où provient ledit paquet ;

- un bloc unitaire comprend un bloc de routage adapté pour mettre en œuvre lesdites réceptions et/ou transmissions de données par le bloc unitaire, ledit bloc de routage étant adapté pour mettre en œuvre des fonctions de routage parallèle de données lors d'un même cycle de traitement, en fonction de directions de communication associés aux données ;

- en cas d'au moins deux requêtes de transmission simultanées vers une même direction par un bloc unitaire lors d'un cycle de traitement, le bloc de routage du bloc unitaire est adapté pour arbitrer la priorité entre lesdites requêtes, la requête arbitrée prioritaire étant alors transmise dans ladite direction et l'autre requête étant mémorisée, puis transmise vers ladite direction à un cycle de traitement ultérieur.

Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente un accélérateur de réseau de neurones dans un mode de réalisation de l'invention ;

[Fig. 2] La figure 2 représente un bloc unitaire de traitement dans un mode de réalisation de l'invention ;

[Fig. 3] La figure 3 représente un procédé dans un mode de réalisation de l'invention ;

[Fig. 4] La figure 4 représente la structure de paquets de communication dans l'accélérateur dans un mode de réalisation ;

[Fig. 5] La figure 5 représente un bloc de routage dans un mode de réalisation de l'invention ;

[Fig. 6] La figure 6 schématise l'architecture de contrôle de calcul et de communication dans un mode de réalisation de l'invention ;

[Fig. 7] La figure 7 illustre un stade de calculs de convolution ;

[Fig. 8] La figure 8 illustre un autre stade de calculs de convolution ;

[Fig. 9] La figure 9 représente un autre stade de calculs de convolution ;

[Fig. 10] La figure 10 illustre l'étape 101 du procédé de la figure 3 ;

[Fig. 11] La figure 11 illustre l'étape 102 du procédé de la figure 3 ;

[Fig. 12] La figure 12 illustre l'étape 103 du procédé de la figure 3.

Des références identiques peuvent être utilisées dans des figures différentes lorsqu'elles désignent des éléments identiques ou comparables.

**Description détaillée :**

Un CNN comporte différents types de couches successives de réseau de neurones, dont les couches de convolution, chaque couche étant associée à un ensemble de filtres. Une couche de convolution analyse par zones, à l'aide de chaque filtre (à titre d'exemple : Sobel horizontal, Sobel vertical,... ou tout autre filtre considéré, notamment issu d'un apprentissage) de l'ensemble de filtres, au moins une matrice de données, qui lui est fournie en entrée, nommée Input Feature Map (nommée aussi IN par la suite) et délivre en sortie au moins une matrice de données, nommée ici Output Feature Map (nommée aussi OUT par la suite), qui permet de ne garder que ce qui est recherché selon le filtre considéré.

La matrice IN est une matrice de n lignes et n colonnes. Un filtre F est une matrice de p lignes et p colonnes. La matrice OUT est une matrice de m lignes et m colonnes. Dans des cas particuliers, , m = n - p + 1, sachant que la formule exacte est :

$$m=(n-f+2p)/s +1,$$

où

m: ofmap (mxm) - la taille peut ne pas être régulière

n: ifmap (nxn) - la taille peut ne pas être régulière

f: filtre (fxf)

p: marge à 0 (0-padding)

s :pas (stride).

Par exemple, p = 3 ou 5 ou 9 ou 11.

De manière connue, les convolutions effectuées correspondent par exemple au processus suivant : la matrice de filtre est disposée sur le coin haut à gauche de la matrice IN, un produit de chaque couple de coefficients ainsi superposés est effectué ; l'ensemble des produits est sommé, ce qui donne la valeur du pixel (1,1) de la matrice de sortie OUT. La matrice de filtre est alors décalée d'une case (stride) horizontalement vers la droite, et le processus est réitéré, fournissant la valeur du pixel (1,2) de la matrice OUT, etc. Une fois arrivé en fin de ligne, le filtre est descendu verticalement d'une case, le processus est réitéré en repartant ensuite de la droite, etc. jusqu'à avoir parcouru toute la matrice IN.

Les calculs de convolution sont généralement mis en œuvre par des unités de calcul de réseau de neurones, encore appelés accélérateur d'intelligence artificielle ou NPU (en anglais Neural Processing Unit), comprenant un réseau d'éléments processeurs PE.

Dans un exemple, il est présenté ci-dessous un exemple de calcul effectué classiquement dans une couche de convolution mise en œuvre par un accélérateur.

On considère le filtre F constitué des poids suivants :

[Table 1]

| $f_1$ | $f_2$ | $f_3$ |
|---|---|---|
| $f_4$ | $f_5$ | $f_6$ |
| $f_7$ | $f_8$ | $f_9$ |

On considère la matrice IN suivante :

[Table 2]

| $in_1$ | $in_2$ | $in_3$ | $in_4$ | $in_5$ |
|---|---|---|---|---|
| $in_6$ | $in_7$ | $in_8$ | $in_9$ | $in_{10}$ |
| $in_{11}$ | $in_{12}$ | $in_{13}$ | $in_{14}$ | $in_{15}$ |
| $in_{16}$ | $in_{17}$ | $in_{18}$ | $in_{19}$ | $in_{20}$ |
| $in_{21}$ | $in_{22}$ | $in_{23}$ | $in_{24}$ | $in_{25}$ |

Et on considère la matrice OUT suivante :

[Table 3]

| $out_1$ | $out_2$ | $out_3$ |
|---|---|---|
| $out_4$ | $out_5$ | $out_6$ |
| $out_7$ | $out_8$ | $out_9$ |

L'expression de chaque coefficient de la matrice OUT est une somme pondérée correspondant à une sortie d'un neurone dont des $in_i$ seraient les entrées et des $f_j$ seraient les poids appliqués aux entrées par le neurone et qui calculerait la valeur du coefficient.

Considérons maintenant une grille d'éléments unitaires de calcul pe, comportant autant de lignes que le filtre F (p = 3 lignes) et autant de colonnes que la matrice OUT a de lignes (m = 3) : [pei,j] i = 0 à 2 et j = 0 à 2. Ce qui suit est un exemple d'utilisation de la grille pour calculer les coefficients de la matrice OUT.

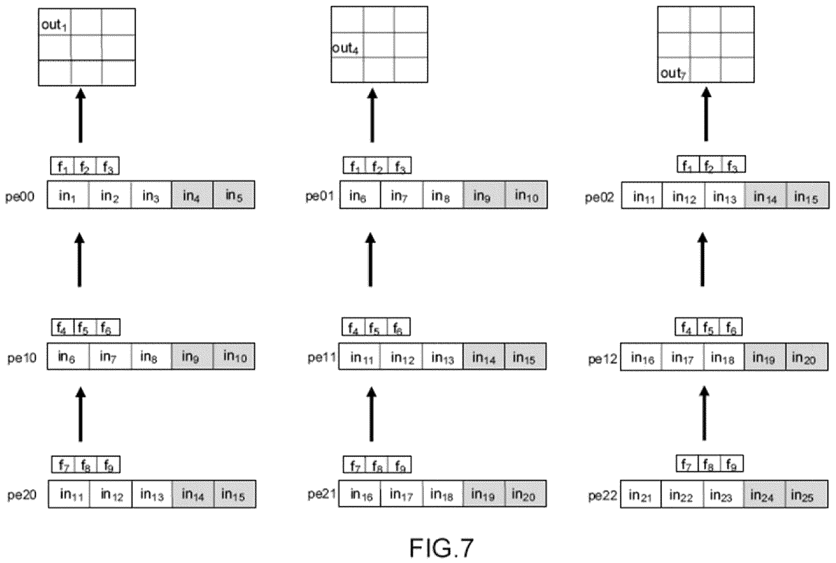

Comme représenté en figure 7, à chaque coefficient de la (i+1) ème ligne des pe, on fournit la (i+1) ème ligne de la matrice de filtre, i=0 à 2. On fournit ensuite à la grille des pe la matrice IN : ainsi la première ligne de IN est fournie à l'élément unitaire de calcul pe00 ; la deuxième ligne de IN aux coefficients pe10 et pe01, situés sur une même diagonale ; la troisième ligne de IN est fournie aux éléments unitaires pe20, pe11 et pe02, situés sur une même diagonale ; la quatrième ligne de IN est fournie aux éléments pe21 et pe12 sur une même diagonale, et la cinquième ligne de IN est fournie à pe22.

Dans une première salve de calcul représentée également sur la figure 7, une convolution (combinaison de multiplications et de sommes) est effectuée dans chaque pe entre la rangée de filtre qui lui a été fournie et les p premiers coefficients de la rangée de la matrice IN qui lui a été fournie, délivrant une somme partielle nommée (les cases grisées de la ligne de IN ne sont pas utilisées pour le calcul courant). Ainsi pe00 calcule f1.in1 + f2.in2 + f3.in3 etc. Ensuite les trois sommes partielles déterminées par les pe d'une même colonne sont sommés progressivement : la somme partielle déterminée par pe2j est fournie à pe1j qui l'ajoute à la somme partielle qu'il a précédemment calculée, cette nouvelle somme partielle issue de l'accumulation est alors à son tour fournie par pe1j à pe0j qui l'ajoute à la somme partielle qu'il avait calculée, j = 0 à 2 : le total ainsi obtenu est égal au premier coefficient de la $j+1^{\text{éme}}$ ligne de la matrice OUT.

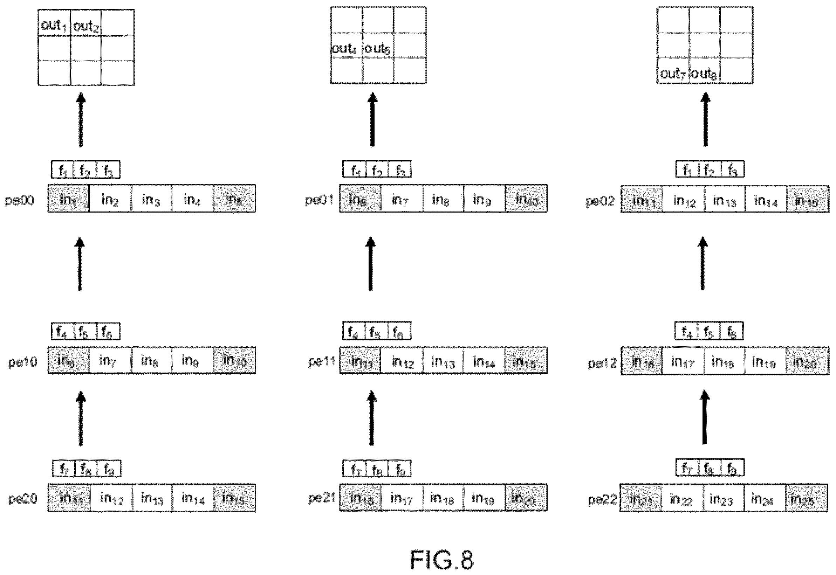

Dans une deuxième salve de calcul représentée en figure 8, une convolution est effectuée dans chaque pe entre la rangée de filtre qui lui a été fournie et les p = 3 coefficients, à partir du $2^{\text{ème}}$ coefficient, de la rangée de la matrice IN qui lui a été fournie, délivrant une somme partielle. Ainsi pe00 calcule f1.in2 + f2.in3 + f3.in4 etc. Ensuite les trois sommes partielles déterminées par les pe d'une même colonne sont sommées progressivement comme décrit ci-dessus et le total ainsi obtenu est égal au deuxième coefficient de la $j+1^{\text{ème}}$ ligne de la matrice OUT.

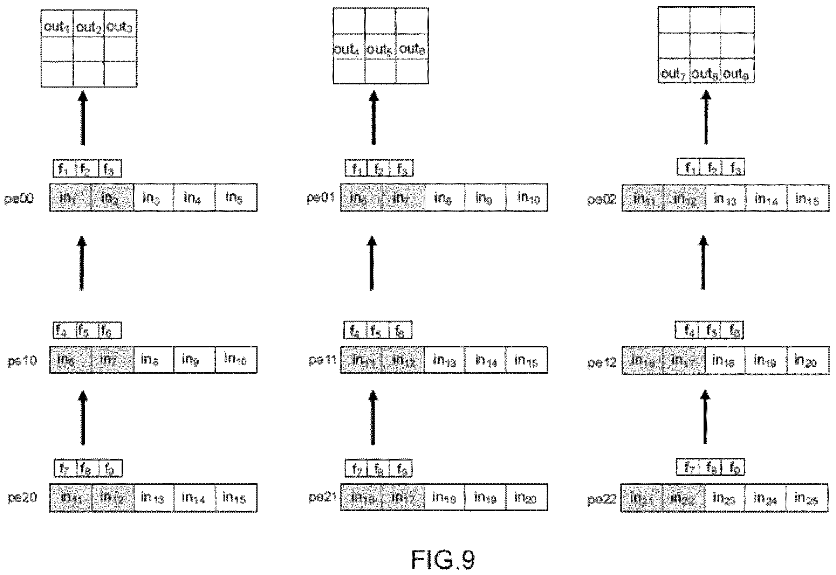

Dans une troisième salve de calcul représentée en figure 9, une convolution est effectuée dans chaque pe entre la rangée de filtre qui lui a été fournie et les p = 3 coefficients, à partir du $3^{\text{ème}}$ coefficient, de la rangée de la matrice IN qui lui a été fournie, délivrant une somme partielle nommée. Ainsi pe00 calcule f1.in3 + f2.in4 + f3.in5 etc. Ensuite les trois sommes partielles déterminées par les pe d'une même colonne sont sommées progressivement comme décrit ci-dessus et le total ainsi obtenu est égal au troisième coefficient de la $j+1^{\text{ème}}$ ligne de la matrice OUT.

Dans le processus de calcul décrit ici à titre d'exemple, la ième ligne de pes permet ainsi de construire successivement la ième colonne de OUT, i = 1 à 3.

Il découle de cet exemple que les lignes des données manipulées (poids des filtres, données des Input Feature Map et sommes partielles) sont réutilisées spatialement entre les éléments processeurs unitaires : ici par exemple, les mêmes données de filtres sont utilisées par les pe d'une même ligne horizontale et les mêmes données IN sont utilisées par tous les pe de lignes diagonales, tandis que les sommes partielles sont transférées verticalement, puis réutilisées.

Il importe donc que les communications de ces données et les calculs impliqués soient réalisés de manière optimisée en terme de temps de transfert et de calcul d'accès à la mémoire centrale délivrant initialement ces données, et cela quelles que soient les dimensions des données d'entrée et données de sortie ou les calculs mis en œuvre.

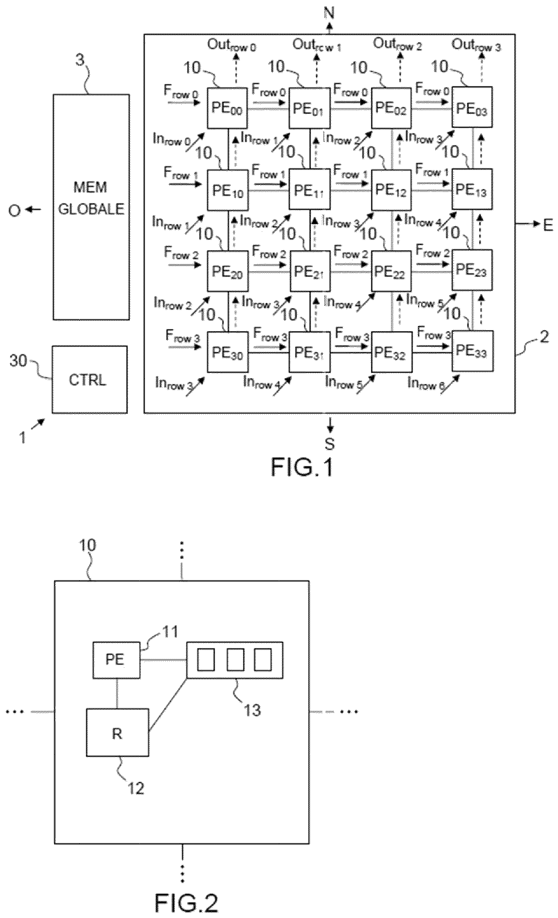

A cet effet, en référence à la figure 1, un accélérateur 1 de réseaux de neurones CNN dans un mode de réalisation de l'invention comprend une grille 2 de blocs unitaires de traitement 10, une mémoire globale 3 et un bloc de contrôle 30.

La grille 2 de blocs unitaires de traitement 10 comprend des blocs unitaires de traitement 10 disposés en réseau, connectés par des liens de communication horizontaux et verticaux permettant l'échange de paquets de données entre blocs unitaires, par exemple selon une organisation matricielle en N lignes et M colonnes.

L'accélérateur 1 a par exemple une architecture basée sur un NoC (Network on Chip).

Dans un mode de réalisation, chaque bloc de traitement 10 comprend, en référence à la figure 2, un processeur PE (Processing Element en anglais) 11 adapté pour réaliser des opérations de calcul, de type MAC notamment, un ensemble mémoire 13, comprenant par exemple plusieurs registres, destinés à stocker les données de filtre, les données d'entrée d'Input Feature Map reçus par le bloc de traitement 10 et les résultats (sommes partielles, accumulations de sommes partielles) calculés par le PE 11 notamment, et un routeur 12 adapté pour router les communications de données entrantes ou sortantes.

On repère un bloc unitaire de traitement 10 (et similairement son PE) par son rang de ligne et de colonne dans la grille, comme représenté en figures 1, 10, 11 et 12. Ainsi le bloc 10 de traitement (i,j), comprenant le $PE_{ij}$ 11, est situé sur la i+1ème ligne et j+1ème colonne de la grille 2, i = 0 à 3 et j = 0 à 3.

Chaque bloc 10 de traitement non situé en bordure du réseau comporte ainsi 8 blocs 10 de traitement voisins, dans les directions suivantes : un au Nord (N), un au Sud (S) un à l'Ouest (O), un à l'Est (E), un au Nord-Est, un au Nord-Ouest, un au Sud-Est, et un au Sud-Ouest.

Le bloc de contrôle 30 est adapté pour synchroniser, entre eux, les traitements de calcul dans les PE et de transfert de données entre blocs unitaires 10 ou au sein de blocs unitaires 10 et mis en oeuvre dans l'accélérateur 1. Tous ces traitements sont cadencés par une horloge de l'accélérateur 1.

Il y aura eu une étape préalable de configuration de la grille 2 pour sélectionner l'ensemble de PE à utiliser, parmi les PE disponibles de l'architecture matérielle maximale de l'accélérateur 1, pour l'application du filtre considéré d'une couche du réseau de neurones à une matrice IN. Au cours de cette configuration, le nombre de lignes « actives » de la grille 2 est fixé égal au nombre de lignes du filtre (p) et le nombre de colonnes « actives » de la grille 2 est pris égal au nombre de lignes de la matrice OUT (m). Dans le cas représenté en figures 1, 10, 11 et 12, ces nombres p et m sont égaux à 4 et le nombre n de lignes de la matrice IN est égal à 7.

La mémoire globale 3, par exemple de type mémoire externe DRAM ou mémoire tampon global SRAM), comporte ici toutes les données initiales : les poids de la matrice de filtre et les données d'entrée de la matrice Input Feature Map à traiter. La mémoire globale 3 est adaptée également pour stocker les données de sortie délivrées par la grille 2, dans l'exemple considéré, par les PE en bordure Nord de la grille 2. Un ensemble de bus de communications (non représenté) relie par exemple la mémoire globale 3 et la grille 2 pour assurer ces échanges de données.

Dans ce qui suit et sur les figures, l'ensemble des données de la (i+1)ème ligne des poids dans la matrice de filtre est notée $F_{rowi}$, i = 0 à p-1 ; l'ensemble des données de la (i+1)ème ligne de la matrice IN est notée $in_{rowi}$, i = 0 à n-1 ; les données issues d'un calcul de sommes partielles réalisé par le $PE_{ij}$ est noté $psum_{ij}$ i = 0 à 3 et j = 0 à 3.

Les flèches en Figure 1 représentent la façon dont les données sont réutilisées dans la grille 2. En effet, les lignes d'un même filtre, $F_{rowi}$, i = 0 à p-1, sont réutilisées horizontalement à travers les PEs (il s'agit donc d'un multicast horizontal des poids du filtre), les lignes $in_{rowi}$ de IN, i = 0 à n-1 sont réutilisées diagonalement à travers les PEs (un multicast diagonal de l'image d'entrée, ici mis en oeuvre par la succession d'un multicast horizontal et d'un multicast vertical) et les sommes partielles psum sont accumulées verticalement à travers les PEs (il s'agit d'un unicast des psum), comme représenté par les flèches verticales en pointillé.

Pendant le calcul des CNNs profonds, chaque donnée peut être exploitée de nombreuses fois par des opérations MAC mises en œuvre par les PEs. Le chargement répété de ces données à partir de la mémoire globale 3 introduirait un nombre excessif d'accès mémoire. La consommation d'énergie des accès à la mémoire globale peut être beaucoup plus importante que celle des calculs logiques (opération MAC par exemple). La réutilisation des données des blocs de traitement 10 permises par les communications entre les blocs 10 de ces données dans l'accélérateur 1 permet de limiter les accès à la mémoire globale 3 et de réduire ainsi la consommation d'énergie induite.

L'accélérateur 1 est adapté pour mettre en œuvre, dans la phase d'inférence du réseau de neurones, la réutilisation en parallèle, décrite ci-dessus, par les PE des trois types de données que sont les poids du filtre, les données d'entrée de la matrice Input Feature Map et les sommes partielles, ainsi que le recouvrement, par le calcul, des communications, dans un mode de réalisation de l'invention.

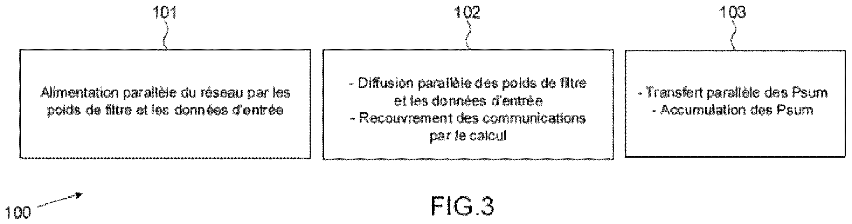

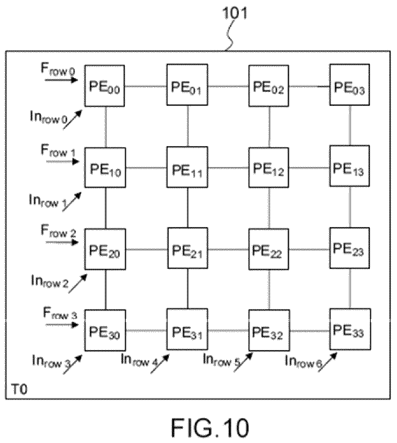

L'accumulateur 1 est notamment adapté pour mettre en œuvre les étapes décrites ci-dessous d'un procédé 100 de traitement, en référence à la figure 3 et aux figures 10, 11, 12.

Dans une étape 101, en référence aux figures 3 et 10, une alimentation parallèle de la grille 2 est effectuée avec les poids de filtre et les données d'entrée de la matrice IN, via le bus entre la mémoire globale 3 et la grille 2.

Ainsi, au cycle de traitement T0 (les cycles sont cadencés par l'horloge de l'accélérateur 1) :

la première colonne de la grille 2 est alimentée par les lignes respectives du filtre : la ligne de poids $F_{rowi}$, i = 0 à 3 est fournie en entrée du bloc 10 de traitement (i, 0) ;

la première colonne et la dernière ligne de la grille 2 sont alimentées par les lignes respectives de la matrice Input Feature Map : la ligne $in_{rowi}$, i = 0 à 3 est fournie en entrée du bloc 10 de traitement (i, 0) et la ligne $in_{rowi}$, i = 4 à 6 est fournie en entrée du bloc 10 de traitement (3, i-3).

Au cycle T1 suivant le cycle T0, les poids et données issues de la matrice IN reçus par chacun de ces blocs 10 sont stockés dans des registres respectifs de la mémoire 13 du bloc 10.

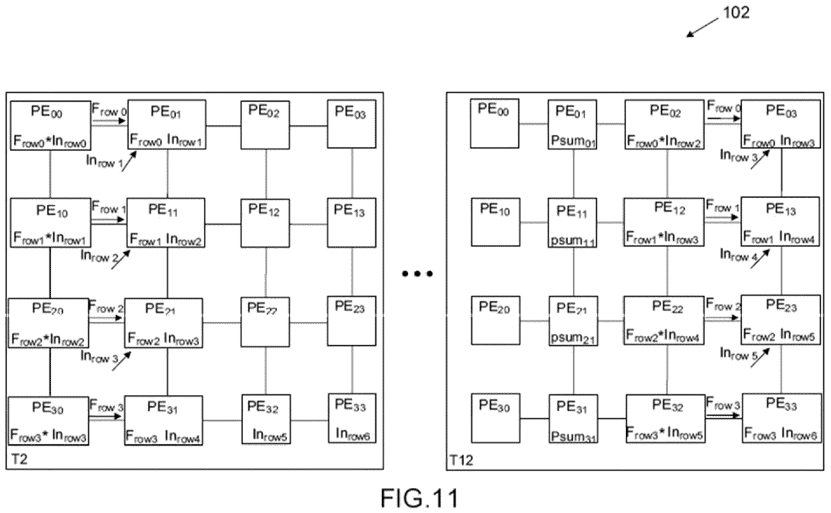

Dans une étape 102, en référence aux figures 3 et 11, la diffusion des poids de filtre et des données d'entrée au sein du réseau est itérée : elle est effectuée en parallèle, par multicast horizontal des lignes de poids de filtre et multicast diagonal des lignes de l'image d'entrée Input Feature Map, comme représenté séquentiellement en figure 11 et synthétisé en figure 3.

Ainsi au cycle T2 :

-  la première colonne envoie, par diffusion horizontale, à la deuxième colonne de la grille 2 les lignes respectives du filtre préalablement stockée : la ligne de poids $F_{rowi}$, i = 0 à 3, est fournie en entrée du bloc 10 de traitement (i, 1) par le bloc de traitement (i,0) ; et en parallèle

-  chacun des blocs 10 de traitement (i, 0) transmet la ligne $in_{rowi}$, i = 1 à 3 - et chacun des blocs 10 de traitement (3, i-3) transmet la ligne $in_{rowi}$, i = 4 à 6 - à destination du bloc 10 de traitement qui leur est voisin en direction NE (par exemple le bloc (3,0) transmet à destination du bloc (2,1)) : pour arriver à destination, cela prendra dans le cas présent, pour atteindre ce voisin, il convient en réalité de faire deux transmissions : une transmission horizontale et une transmission verticale (par exemple pour que les données parviennent du bloc 10 (3,0) au bloc 10 (2,1), elle ira du bloc (3,0) au bloc (3,1), puis au bloc (2,1) : donc d'abord les voisins à l'Est des blocs 10 de traitement (i, 0), i = 1 à 3 et des blocs 10 de traitement (3, i-3) reçoivent d'abord la ligne ;

-  la première colonne des blocs 10 de traitement disposant des poids de filtre et des données d'entrée de la matrice IN, les PE de ces blocs mettent en oeuvre un calcul de convolution entre le filtre et (certaines au moins de) ces données d'entrée ; le résultat ainsi calculé de somme partielle $psum_{0j}$ par le $PE_{0j}$, j = 0 à 3, est stocké dans un registre de la mémoire 13.

Au cycle T3, les poids de filtre et données issues de la matrice IN reçus à T2 par ces blocs 10 à T2 sont stockés dans des registres respectifs de la mémoire 13 de chacun de ces blocs 10.

Au cycle T4, en parallèle :

la deuxième colonne alimente, par diffusion horizontale, la troisième colonne de la grille 2 par les lignes respectives du filtre préalablement stockée : la ligne de poids $F_{rowi}$, i = 0 à 3, est fournie en entrée du bloc 10 de traitement (i, 2) par le bloc de traitement (i, 1) ;

les blocs 10 de traitement (i-1, 1) reçoivent la ligne $in_{rowi}$, i = 1 à 3 et chacun des blocs 10 de traitement (2, i-2) reçoivent la ligne $in_{rowi}$, i = 4 à 5 ;

la deuxième colonne des blocs 10 de traitement disposant des poids de filtre et des données d'entrée de la matrice IN, les PE de ces blocs mettent en oeuvre un calcul de convolution entre le filtre et (certaines au moins de) ces données d'entrée; le résultat ainsi calculé de somme partielle $psum_{1j}$ par le $PE_{1j}$, j = 0 à 3, est stocké dans un registre de la mémoire 13.

Au cycle T5, les poids de filtre et données issues de la matrice IN reçus à T4 par ces blocs 10 sont stockés dans des registres respectifs de la mémoire 13 de chacun de ces blocs 10.

Au cycle T6, en parallèle :

la troisième colonne alimente, par diffusion horizontale, la quatrième colonne de la grille 2 par les lignes respectives du filtre préalablement stockée, achevant ainsi la diffusion des poids de filtre dans la grille 2 : la ligne de poids $F_{rowi}$, i = 0 à 3, est fournie en entrée du bloc 10 de traitement (i, 3) par le bloc de traitement (i,2) ;

les blocs de 10 traitement ayant reçus au temps T4 une ligne de la matrice IN et ayant un voisin en direction du NE émettent à leur tour cette ligne de matrice IN à destination de ce voisin.

Au cycle T7, les poids de filtre et données issues de la matrice IN reçus à T4 par ces blocs 10 sont stockés dans des registres respectifs de la mémoire 13 de chacun de ces blocs 10.

Au cycle T8, la troisième colonne des blocs 10 de traitement disposant des poids de filtre et des données d'entrée de la matrice IN, les PE de ces blocs mettent en oeuvre un calcul de convolution entre le filtre et (certaines au moins de) ces données d'entrée ; le résultat ainsi calculé de somme partielle $psum_{2j}$ par le $PE_{2j}$, j = 0 à 3, est stocké dans un registre de la mémoire 13.

les blocs de 10 traitement ayant reçus au temps T6 une ligne de la matrice IN et ayant un voisin en direction du NE émettent à leur tour cette ligne de matrice IN à destination de ce voisin.

La diffusion diagonale se poursuit.

Au cycle T12, le bloc 10 (03) a reçu à son tour la ligne $in_{row3}$.

La quatrième colonne des blocs 10 de traitement disposant des poids de filtre et des données d'entrée de la matrice IN, les PE de ces blocs mettent en oeuvre un calcul de convolution entre le filtre et (certaines au moins de) ces données d'entrée ; le résultat ainsi calculé de somme partielle $psum_{3j}$ par le $PE_{3j}$, j = 0 à 3, est stocké dans un registre de la mémoire 13.

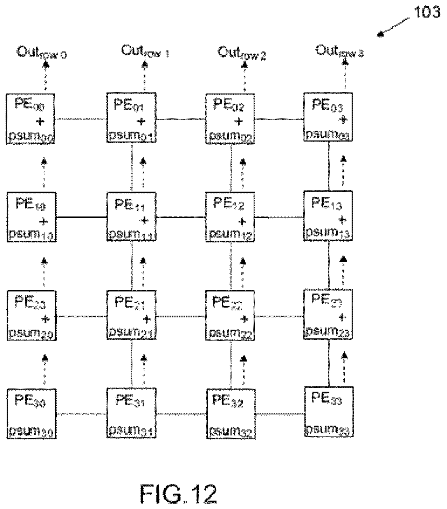

Dans une étape 103, en référence aux figures 3 et 12, un transfert parallèle des sommes partielles psum est effectué et il est procédé à l'accumulation de ces psums : les blocs de traitement 10 de la dernière ligne de la grille 2 envoient chacun la somme partielle calculée à leur voisin situé en direction Nord. Celui-ci accumule cette somme partielle reçue à celle qu'il a précédemment calculée et à son tour envoie la somme partielle accumulée à son voisin Nord qui répète la même opération etc. jusqu'à ce que les blocs de traitement 10 de la première ligne de la grille 2 aient effectué cette accumulation (l'ensemble de ces traitements étant effectués de façon cadencé par l'horloge de l'accélérateur 1). Cette dernière accumulation réalisée par chaque bloc de traitement (0,j) j = 0 à 3, correspond à (une partie) des données de la ligne j de la matrice OUT. Elle est alors délivrée par le bloc de traitement (0,j) à la mémoire globale 3 pour stockage.

Les résultats Output Feature maps de la couche de convolution considérés sont ainsi déterminés en fonction des sorties $Out_{rowi}$, i = 0 à 3.

Comme cela a été démontré en référence à la figure 3, la diffusion des poids de filtre est effectuée dans l'accélérateur 1 (un multicast des poids de filtre avec une réutilisation horizontale des poids de filtre à travers les blocs de traitement 1) en parallèle de la diffusion des données d'entrée de la matrice IN (multicast des lignes de l'image avec une réutilisation diagonale à travers les blocs de traitement 10).

Le recouvrement des communications par le calcul permet une réduction du coût de transfert de données en améliorant le temps d'exécution des programmes parallèles en diminuant la contribution effective du temps dédié au transfert des données au temps d'exécution de l'application complète. Les calculs sont découplés de la communication des données dans la grille afin que les PE 11 effectuent des travaux de calcul pendant que l'infrastructure de communication (routeurs 12 et liens de communication) effectue le transfert des données. Ceci permet de cacher en partie ou totalement le surcoût de la communication, sachant que le recouvrement ne peut être parfait que si le temps de calcul dépasse le temps de communication et que le matériel permet de supporter ce paradigme.

Dans le mode de réalisation décrit ci-dessus relativement à la figure 3, il est attendu que toutes les psum soient calculées avant de procéder à leur accumulation. Dans un autre mode de réalisation, l'accumulation des psum est lancée sur les premières colonnes du réseau alors même que le transfert des données de filtre et des données de matrice IN se poursuit dans les colonnes plus à l'Est et que donc les psum pour ces colonnes ne sont encore pas calculées : il y a donc dans ce cas un recouvrement des communications par les communications des sommes partielles psum, ce qui permet de réduire encore davantage la contribution des transferts de données dans le temps d'exécution total de l'application et ainsi améliorer les performances. Les premières colonnes peuvent alors, en option, être utilisées plus rapidement pour d'autres mémorisations et d'autres calculs, le temps de traitement global s'en trouvant donc encore amélioré.

Les opérations ont été décrites ci-dessus dans le cas particulier d'un RS (Row Stationary) Dataflow et d'une couche convolutive de type Conv2D (cf. Y. Chen ae al. 2017. Eyeriss: An Energy-Efficient Reconfigurable Accelerator for Deep Convolutional Neural Networks. IEEE Journal of Solid-State Circuits 52, 1 (Nov. 2017), 127-138). Mais d'autres types d'exécution Dataflow (WS Weight-Stationnary Dataflow, IS Input-Stationnary Dataflow, OS Output-Stationnary Dataflow, etc) impliquant d'autres schémas de réutilisation des données entre PE donc d'autres chemins de transfert, d'autres organisations des calculs, d'autres types de couches CNN (Fully Connected, PointWise, depthWise, Residual) etc. peuvent être mises en œuvre selon l'invention : les transferts des données de chaque type de données (filtre, ifmap, psum), pour leur réutilisation parallèle, doivent pouvoir ainsi être réalisés dans l'une quelconque des directions possibles dans les routeurs, et ce en parallèle des transferts de données de chaque autre type (on notera que des modes de réalisation peuvent bien sûr n'utiliser que certaines des options proposées : par exemple, la réutilisation spatiale d'un sous-ensemble seulement des types de donnée parmi les données de type filtre, Input Feature Maps, sommes partielles).

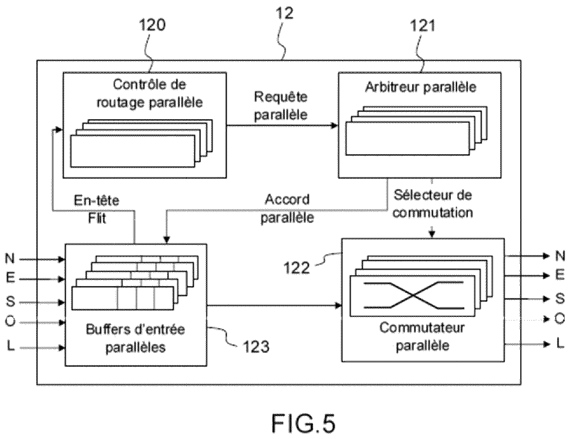

A cet effet, le dispositif de routage 12 comprend en référence à la figure 5, un bloc de contrôles de routage parallèles 120, un bloc d'arbitres parallèles 121, un bloc de commutateurs parallèles 122 et un bloc de buffers d'entrée parallèles 123.

En effet, à travers ces différents modules de bufférisation (par exemple des FIFO, First-In-First-Out) du bloc 123, différentes requêtes de communication de données (filtres, données IN ou psums) reçues en parallèle (par exemple d'un bloc 10 voisin à l'Est (E), à l'Ouest (O), au Nord (N), au Sud (S), ou en local du PE ou des registres) peuvent être stockées sans aucune perte.

Ces requêtes sont ensuite traitées simultanément dans plusieurs modules de contrôle au sein du bloc de contrôles de routage parallèles 120, en fonction des en-têtes Flit (Flow control unit) des paquets de données. Ces modules de contrôle de routage assurent un contrôle déterministe du transfert de données selon un algorithme de routage statique X-Y (par exemple) et une gestion de différentes sortes de communications (unicast, multicast horizontal, vertical ou diagonal et broadcast).

Les requêtes résultantes émises par les modules de contrôle de routage sont fournies en entrée du bloc d'arbitres parallèles 122 Un arbitrage parallèle de priorité de l'ordre de traitement des paquets de données entrants selon, par exemple la politique d'arbitrage Round-Robin basée sur un accès planifié permet de mieux gérer les collisions, c'est-à-dire, une demande qui vient d'être accordée aura la priorité la plus basse sur le prochain cycle d'arbitrage. En cas de demandes simultanées d'une même sortie (E, O, N, S), les requêtes sont mémorisées pour éviter l'interblocage ou la perte de données (i.e. deux requêtes simultanées sur une même sortie au sein d'un même routeur 12 ne sont pas servies sur un même cycle). L'arbitrage effectué est ensuite indiqué au bloc de commutateurs parallèles 122.

La commutation parallèle aiguille simultanément les données aux bonnes sorties selon la règle de commutation Wormhole par exemple, c'est-à-dire que la connexion entre une des entrées et une des sorties d'un routeur est maintenue jusqu'à ce que tous les données élémentaires d'un paquet du message soient envoyées et cela de façon simultanée à travers les différents modules de commutations pour leur direction respective N, E, S, O, L.

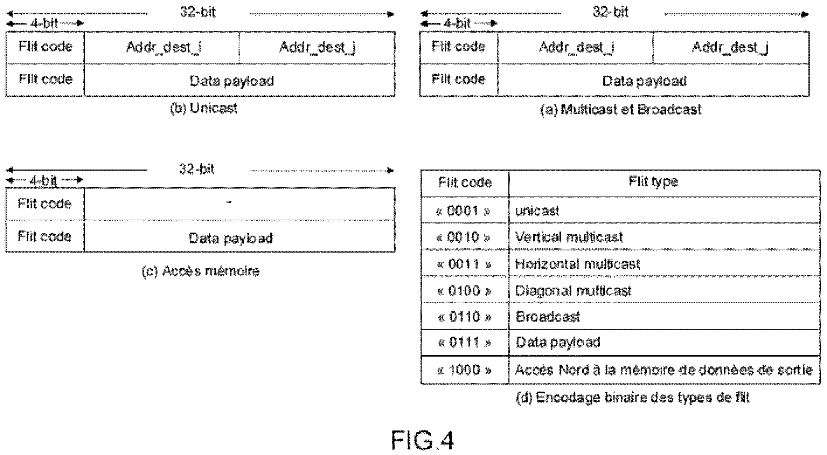

Le format du paquet de données est représenté en Figure 4. Le paquet est de taille configurable $W_{data}$ (sur la figure 32 bits) et se compose d'un flit d'en-tête suivi de flits de charge utile (payload). La taille du paquet dépendra de la taille du réseau d'interconnexion, puisque plus le nombre de routeurs 11 augmente, plus le nombre de bits pour coder les adresses des destinataires ou des émetteurs augmente. De même, la taille du paquet varie avec la taille des charges utiles (poids des filtres, les activations d'entrées ou les sommes partielles) à faire circuler dans la grille 2. La valeur de l'en-tête détermine la communication à assurer par le routeur. Il existe plusieurs types de communication possibles : unicast, multicast horizontal, multicast vertical, multicast diagonal et broadcast, accès mémoire 3. Le routeur 11 reçoit d'abord le paquet de contrôle contenant le type de la communication et le destinataire ou la source, identifié par ses coordonnées (i,j) dans la grille, de la manière représentée en figure 4. Le routeur 11 décode ce mot de contrôle et alloue ensuite le chemin de communication pour transmettre le paquet de données utiles qui arrive au cycle suivant la réception du paquet de contrôle. Les couples de paquets correspondant sont représentés en figure 4 (a, b, c) Une fois le paquet de donnée utile transmis, le chemin alloué sera libéré pour réaliser d'autres transferts.

Dans un mode de réalisation, le routeur 12 est adapté pour empêcher le rétro-transfert lors d'une multidiffusion (communications multicast et broadcast), afin d'éviter le re-bouclage de transfert et pour mieux contrôler le délai de transmission des données dans toute la grille 12. En effet, lors du broadcast selon l'invention, les paquets en provenance d'une ou plusieurs directions seront transmis aux autres directions, la/les direction(s) source(s) étant inhibée(s). Ceci rend le délai maximal de broadcast dans un réseau de taille NxM est égale à [(N-1) + (M-1)]. Ainsi quand un paquet à diffuser en broadcast arrive en entrée d'un routeur 12 d'un bloc de traitement 10 (bloc A) depuis un bloc 10 voisin situé une direction E, O, N ou S par rapport au bloc A, ce paquet est renvoyé en parallèle dans toutes les directions sauf celle dudit bloc voisin.

Par ailleurs dans un mode de réalisation, quand un paquet est à transmettre en multicast (horizontal ou vertical) depuis un bloc de traitement 10 : si ledit bloc en est la source (i.e. le paquet vient du PE du bloc), le multicast est bidirectionnel (il est effectué en parallèle vers E et O pour un multicast horizontal, vers S et N pour un multicast vertical) ; sinon le multicast est unidirectionnel, dirigé à l'opposé du bloc de traitement 10 voisin d'où provient le paquet.

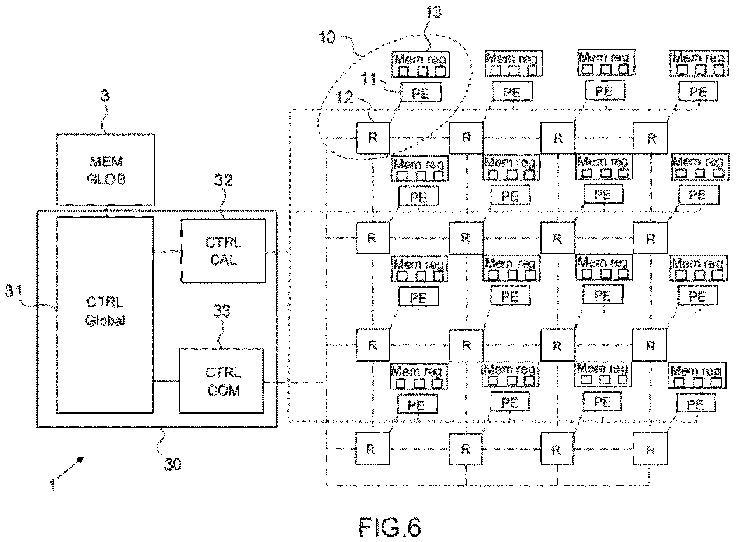

Dans un mode de réalisation, pour garantir et faciliter le recouvrement des communications par le calcul, en référence à la figure 6, le bloc de contrôle 30 comprend un bloc de contrôle global 31, un bloc de contrôle de calcul 32 et un bloc de contrôle de communication 33 : le contrôle de communication est effectué indépendamment du contrôle de calcul, tout en gardant des points de synchronisation entre les deux processus afin de faciliter leur exécution simultanée.

Le contrôleur de calcul 32 permet de commander les opérations de multiplication et d'accumulation, ainsi que les opérations de lecture et d'écriture des mémoires locales (par exemple, banc de registres), tandis que le contrôleur de communication 33 gère les transferts de données de la mémoire globale 3 et les mémoires locales 13, ainsi que les transferts de données de calcul entre blocs de traitement 10. Des points de synchronisation entre les deux contrôleurs sont mis en place afin d'éviter l'écrasement ou la perte des données. Avec ce mécanisme de contrôle de communication indépendant de celui du calcul, on peut assurer le transfert des poids en parallèle du transfert des données et l'exécution des opérations de communication en parallèle du calcul. On arrive, ainsi, à couvrir non seulement la communication par le calcul mais également une communication par une autre communication.

L'invention propose ainsi une solution d'exécution du flot de données basé sur le recouvrement des communications par le calcul pour améliorer les performances et sur la réutilisation, par exemple paramétrable, des données (filtres, images d'entrée et sommes partielles) afin de réduire les accès multiples aux mémoires, permettant d'assurer la flexibilité des traitements et réduire la consommation d'énergie dans les architectures spécialisées de réseaux de neurones convolutifs (CNNs) d'inférences. L'invention propose également un routage parallèle pour garantir les caractéristiques de l'exécution du flot de données en assurant des échanges de données de type "any-to-any" avec des interfaces larges pour supporter de longues bursts de données. Ce routage est conçu pour supporter une communication flexible avec de nombreuses requêtes multicast/broadcast avec des transferts non bloquants.

L'invention a été décrite ci-dessus dans une implémentation sur NoC. D'autres types d'architectures Dataflow peuvent néanmoins être utilisées.

## Revendications

1. Procédé de traitement dans un accélérateur (1) de réseau de neurones convolutifs comprenant une grille (2) de blocs unitaires de traitement (10), chaque bloc unitaire de traitement (11) comprenant un routeur (12) et un élément unitaire de calcul PE (11) associé à un ensemble (13) de mémoires locales respectives, l'élément unitaire de calcul permettant d'effectuer des opérations de calcul parmi des multiplications et des accumulations de données stockées dans ses mémoires locales, le routeur permettant de réaliser plusieurs routages de données indépendants en parallèle vers des sorties distinctes du routeur,

    ledit procédé comprenant les étapes suivantes réalisées en parallèle par un même bloc unitaire de traitement lors d'un même cycle respectif de traitement cadencé par une horloge de l'accélérateur :

      - recevoir et/ou transmettre, à travers le routeur du bloc unitaire, des première et deuxième données depuis ou à destination de blocs unitaires voisins dans la grille selon des première et deuxième directions sélectionnées, en fonction desdites données, parmi au moins les directions verticale et horizontale dans la grille ;
      - effectuer, par l'élément unitaire de calcul, une desdites opérations de calcul relatives à des données stockées dans ledit ensemble de mémoires locales lors d'au moins un cycle de traitement antérieur.

2. Procédé de traitement selon la revendication 1, selon lequel, ledit routeur comprend un bloc de contrôles de routage parallèles (120), un bloc d'arbitres parallèles (121), un bloc de commutateurs parallèles (122) et un bloc de buffers d'entrée parallèles (123), le routeur pouvant recevoir et traiter différentes requêtes de communication de données en parallèle.

3. Procédé de traitement selon la revendication 1 ou 2, selon lequel ledit accélérateur comprend un bloc de contrôle global (31), un bloc de contrôle de calcul (32) et un bloc de contrôle de communication (33) le contrôle de communication est effectué indépendamment du contrôle de calcul, le contrôleur de calcul (32) permettant de commander les opérations de calcul réalisées par les éléments unitaires de calcul, ainsi que les opérations de lecture et d'écriture des mémoires locales associées, le contrôleur de communication (33) gérant les transferts de données entre une mémoire globale (3) et les mémoires locales (13), ainsi que les transferts de données entre les blocs de traitement (10).

4. Procédé de traitement selon l'une des revendications précédentes, selon lequel un bloc unitaire (10) effectue une transmission de type sélectionné entre broadcast et multicast en fonction d'un en-tête du paquet à transmettre et selon lequel le bloc unitaire applique au moins une desdites règles :

      pour un paquet à transmettre en broadcast provenant d'un bloc unitaire (10) voisin situé dans une direction donnée par rapport audit bloc devant effectuer la transmission, ledit bloc transmet le paquet au cours d'un cycle dans toutes les directions sauf celle dudit bloc voisin ;
      pour un paquet à transmettre en multicast : si le paquet vient du PE du bloc unitaire, le multicast mis en œuvre par le bloc est bidirectionnel selon deux directions opposées, sinon le multicast mis en œuvre par le bloc est unidirectionnel, dirigé à l'opposé du bloc de traitement voisin d'où provient ledit paquet.

5. Procédé de traitement selon l'une des revendications précédentes, selon lequel en cas d'au moins deux requêtes de transmission simultanées vers une même direction par un bloc unitaire lors d'un cycle de traitement, la priorité entre lesdites requêtes est arbitrée, la requête arbitrée prioritaire est transmise dans ladite direction et l'autre requête est mémorisée, puis transmise vers ladite direction à un cycle de traitement ultérieur.

6. Accélérateur de neurones convolutifs comprenant une grille (2) de blocs unitaires de traitement (10) et une horloge, chaque bloc unitaire de traitement (11) comprenant un routeur (12) et un élément unitaire de calcul PE (11) associé à un ensemble (13) de mémoires locales respectives, l'élément unitaire de calcul permettant d'effectuer des opérations de calcul parmi des multiplications et des accumulations de données stockées dans ses mémoires locales, le routeur étant adapté pour réaliser plusieurs routages de données indépendants en parallèle vers des sorties distinctes du routeur,

dans lequel un même bloc unitaire de traitement (10) de la grille est adapté pour, lors d'un même cycle de traitement cadencé par l'horloge de l'accélérateur :

- recevoir et/ou transmettre, à travers le routeur du bloc unitaire, des première et deuxième données depuis ou à destination de blocs unitaires voisins dans la grille selon des première et deuxième directions sélectionnées, en fonction desdites données, parmi au moins les directions verticale et horizontale dans la grille ;
- effectuer une desdites opérations de calcul relatives à des données stockées dans leur ensemble de mémoires locales lors d'au moins un cycle de traitement antérieur.

7. Accélérateur de neurones convolutifs (1) selon la revendication précédente, dans lequel ledit routeur comprend un bloc de contrôles de routage parallèles (120), un bloc d'arbitres parallèles (121), un bloc de commutateurs parallèles (122) et un bloc de buffers d'entrée parallèles (123), le routeur pouvant recevoir et traiter différentes requêtes de communication de données en parallèle.

8. Accélérateur de neurones convolutifs (1) selon la revendication 6 ou 7, comprenant un bloc de contrôle global (31), un bloc de contrôle de calcul (32) et un bloc de contrôle de communication (33) le contrôle de communication est effectué indépendamment du contrôle de calcul, le contrôleur de calcul (32) permettant de commander les opérations de calcul réalisées par les éléments unitaires de calcul, ainsi que les opérations de lecture et d'écriture des mémoires locales associées, le contrôleur de communication (33) gérant les transferts de données entre une mémoire globale (3) et les mémoires locales (13), ainsi que les transferts de données entre les blocs de traitement (10).

9. Accélérateur de neurones convolutifs (1) selon l'une des revendications 6 à 8, dans lequel un bloc unitaire (10) est adapté pour effectuer une transmission de type sélectionné entre broadcast et multicast en fonction d'un en-tête du paquet à transmettre et le bloc unitaire (10) est adapté pour appliquer au moins une desdites règles :

pour un paquet à transmettre en broadcast provenant d'un bloc 10 voisin situé dans une direction donnée par rapport audit bloc devant effectuer la transmission, ledit bloc transmet le paquet au cours d'un cycle dans toutes les directions sauf celle dudit bloc voisin ;

pour un paquet à transmettre en multicast : si le paquet vient du PE du bloc unitaire, le multicast mis en œuvre par le bloc est bidirectionnel selon deux directions opposées, sinon le multicast mis en œuvre par le bloc est unidirectionnel, dirigé à l'opposé du bloc de traitement voisin d'où provient ledit paquet.

10. Accélérateur de neurones convolutifs (1) selon l'une des revendications 6 à 9, dans lequel en cas d'au moins deux requêtes de transmission simultanées vers une même direction par un bloc unitaire (10) lors d'un cycle de traitement, le bloc de routage du bloc unitaire est adapté pour arbitrer la priorité entre lesdites requêtes, la requête arbitrée prioritaire étant alors transmise dans ladite direction et l'autre requête étant mémorisée, puis transmise vers ladite direction à un cycle de traitement ultérieur.

**Patentansprüche**

1. Verfahren zur Verarbeitung in einem Beschleuniger (1) für konvolutionale neuronale Netzwerke, der ein Raster (2) aus Einheitsverarbeitungsblöcken (10) umfasst, wobei jeder Einheitsverarbeitungsblock (11) einen Router (12) und ein Einheitsrechenelement PE (11) umfasst, das einem Satz (13) jeweiliger lokaler Speicher zugeordnet ist, wobei das Einheitsrechenelement die Durchführung von Rechenoperationen aus Multiplikationen und Akkumulationen von Daten ermöglicht, die in seinen lokalen Speichern gespeichert sind, wobei der Router die parallele Ausführung mehrerer unabhängiger Datenroutings zu unterschiedlichen Ausgängen des Routers ermöglicht, wobei das Verfahren die folgenden Schritte umfasst, die von ein und demselben Einheitsverarbeitungsblock während ein und desselben jeweiligen, durch einen Taktgeber des Beschleunigers getakteten Verarbeitungszyklus parallel ausgeführt werden:

- Empfangen und/oder Senden, über den Router des Einheitsblocks, von ersten und zweiten Daten von oder an benachbarte Einheitsblöcke in dem Raster in einer ersten und einer zweiten Richtung, die in Abhängigkeit von den Daten aus mindestens der vertikalen und der horizontalen Richtung in dem Raster ausgewählt werden;
- Durchführen, durch das Einheitsrechenelement, einer der Rechenoperationen in Bezug auf Daten, die bei mindestens einem vorhergehenden Verarbeitungszyklus in dem Satz lokaler Speicher gespeichert wurden.

**2.** Verarbeitungsverfahren nach Anspruch 1, wobei der Router einen Block paralleler Routing-Steuerungen (120), einen Block paralleler Arbiter (121), einen Block paralleler Schalter (122) und einen Block paralleler Eingangs-Puffer (123) umfasst, wobei der Router verschiedene Datenkommunikationsanfragen parallel empfangen und verarbeiten kann.

**3.** Verarbeitungsverfahren nach Anspruch 1 oder 2, wobei der Beschleuniger einen globalen Steuerblock (31), einen Rechensteuerblock (32) und einen Kommunikationssteuerblock (33) umfasst, wobei die Kommunikationssteuerung unabhängig von der Rechensteuerung durchgeführt wird, wobei die Rechensteuervorrichtung (32) die Steuerung der von den Einheitsrechenelementen ausgeführten Rechenoperationen sowie der Lese- und Schreiboperationen der zugeordneten lokalen Speicher ermöglicht, wobei die Kommunikationssteuervorrichtung (33) die Datenübertragungen zwischen einem globalen Speicher (3) und den lokalen Speichern (13) sowie die Datenübertragungen zwischen den Verarbeitungsblöcken (10) verwaltet.

**4.** Verarbeitungsverfahren nach einem der vorstehenden Ansprüche, wobei ein Einheitsblock (10) eine Übertragung eines Typs, der in Abhängigkeit von einem Header des zu übertragenden Pakets aus Broadcast und Multicast ausgewählt wird, durchführt und wobei der Einheitsblock mindestens eine der folgenden Regeln anwendet:

bei einem im Broadcast zu übertragenden Paket, das von einem benachbarten Einheitsblock (10) stammt, der sich in einer in Bezug auf den Block, welcher die Übertragung durchzuführen hat, gegebenen Richtung befindet, überträgt der Block das Paket während eines Zyklus in alle Richtungen außer der des benachbarten Blocks;
bei einem im Multicast zu übertragenden Paket: wenn das Paket von dem PE des Einheitsblocks kommt, ist der von dem Block eingesetzte Multicast in zwei entgegengesetzte Richtungen bidirektional, wenn nicht, ist der von dem Block eingesetzte Multicast unidirektional und in die dem benachbarten Verarbeitungsblock, von dem das Paket stammt, entgegengesetzte Richtung gerichtet.

**5.** Verarbeitungsverfahren nach einem der vorstehenden Ansprüche, wobei im Falle von mindestens zwei gleichzeitigen Übertragungsanfragen in eine selbe Richtung durch einen Einheitsblock während eines Verarbeitungszyklus die Priorität zwischen den Anfragen arbitriert wird, wobei die als prioritär arbitrierte Anfrage in die Richtung übertragen wird und die andere Anfrage gespeichert und dann in einem späteren Verarbeitungszyklus in die Richtung übertragen wird.

**6.** Konvolutionaler neuronaler Beschleuniger, der ein Raster (2) aus Einheitsverarbeitungsblöcken (10) und einen Taktgeber umfasst, wobei jeder Einheitsverarbeitungsblock (11) einen Router (12) und ein Einheitsrechenelement PE (11) umfasst, das einem Satz (13) jeweiliger lokaler Speicher zugeordnet ist, wobei das Einheitsrechenelement die Durchführung von Rechenoperationen aus Multiplikationen und Akkumulationen von Daten ermöglicht, die in seinen lokalen Speichern gespeichert sind, wobei der Router für die parallele Ausführung mehrerer unabhängiger Datenroutings zu unterschiedlichen Ausgängen des Routers geeignet ist,
wobei ein und derselbe Einheitsverarbeitungsblock (10) des Rasters während eines durch den Taktgeber des Beschleunigers getakteten Verarbeitungszyklus geeignet ist zum:

- Empfangen und/oder Senden, über den Router des Einheitsblocks, von ersten und zweiten Daten von oder an benachbarte Einheitsblöcke in dem Raster in einer ersten und einer zweiten Richtung, die in Abhängigkeit von den Daten aus mindestens der vertikalen und der horizontalen Richtung in dem Raster ausgewählt werden;
- Durchführen einer der Rechenoperationen in Bezug auf Daten, die bei mindestens einem vorhergehenden Verarbeitungszyklus in seinem Satz lokaler Speicher gespeichert wurden.

**7.** Konvolutionaler neuronaler Beschleuniger (1) nach dem vorstehenden Anspruch, wobei der Router einen Block paralleler Routing-Steuerungen (120), einen Block paralleler Arbiter (121), einen Block paralleler Schalter (122) und einen Block paralleler Eingangs-Puffer (123) umfasst, wobei der Router verschiedene Datenkommunikationsanfragen parallel empfangen und verarbeiten kann.

**8.** Konvolutionaler neuronaler Beschleuniger (1) nach Anspruch 6 oder 7, der einen globalen Steuerblock (31), einen Rechensteuerblock (32) und einen Kommunikationssteuerblock (33) umfasst, wobei die Kommunikationssteuerung unabhängig von der Rechensteuerung durchgeführt wird, wobei die Rechensteuervorrichtung (32) die Steuerung der von den Einheitsrechenelementen ausgeführten Rechenoperationen sowie der Lese- und Schreiboperationen der zugeordneten lokalen Speicher ermöglicht, wobei die Kommunikationssteuervorrichtung (33) die Datenübertragungen zwischen einem globalen Speicher (3) und den lokalen Speichern (13) sowie die Datenübertragungen zwischen den Verarbeitungsblöcken (10) verwaltet.

9. Konvolutionaler neuronaler Beschleuniger (1) nach einem der Ansprüche 6 bis 8, wobei ein Einheitsblock (10) geeignet ist zum Durchführen einer Übertragung eines Typs, der in Abhängigkeit von einem Header des zu übertragenden Pakets aus Broadcast und Multicast ausgewählt wird, und der Einheitsblock (10) geeignet ist zum Anwenden mindestens einer der folgenden Regeln:

bei einem im Broadcast zu übertragenden Paket, das von einem Block 10 stammt, der sich in einer in Bezug auf den Block, welcher die Übertragung durchzuführen hat, gegebenen Richtung befindet, überträgt der Block das Paket während eines Zyklus in alle Richtungen außer der des benachbarten Blocks;

bei einem im Multicast zu übertragenden Paket: wenn das Paket von dem PE des Einheitsblocks kommt, ist der von dem Block eingesetzte Multicast in zwei entgegengesetzte Richtungen bidirektional, wenn nicht, ist der von dem Block eingesetzte Multicast unidirektional und in die dem benachbarten Verarbeitungsblock, von dem das Paket stammt, entgegengesetzte Richtung gerichtet.

10. Konvolutionaler neuronaler Beschleuniger (1) nach einem der Ansprüche 6 bis 9, wobei im Falle von mindestens zwei gleichzeitigen Übertragungsanfragen in eine selbe Richtung durch einen Einheitsblock (10) während eines Verarbeitungszyklus, der Routingblock des Einheitsblocks geeignet ist zum Arbitrieren der Priorität zwischen den Anfragen, wobei die als prioritär arbitrierte Anfrage anschließend in die Richtung übertragen wird und die andere Anfrage gespeichert und dann in einem späteren Verarbeitungszyklus in die Richtung übertragen wird.

**Claims**

1. Processing method in a convolutional neural network accelerator (1) comprising an array (2) of unitary processing blocks (10), each unitary processing block (11) comprising a router (12) and a unitary computational element PE (11) associated with a set (13) of respective local memories, the unitary computational element being configured to perform computational operations selected from multiplications and accumulations on data stored in its local memories, the router being configured to perform a plurality of independent data routings in parallel toward distinct outputs of the router, said method comprising the following steps performed in parallel by the same unitary processing block during a same respective processing cycle clocked by a clock of the accelerator:

- receiving and/or transmitting, through the router of the unitary block, first and second data from or to neighboring unitary blocks in the array according to first and second directions selected, on the basis of said data, from among at least the vertical and horizontal directions in the array;
- performing, by the unitary computational element, one of said computational operations in relation to data stored in said set of local memories during at least one previous processing cycle.

2. The processing method according to claim 1, wherein said router comprises a parallel routing control block (120), a parallel arbiter block (121), a parallel switch block (122), and a parallel input buffer block (123), the router being capable of receiving and processing different data communication requests in parallel.

3. Processing method according to claim 1 or 2, wherein said accelerator comprises a global control block (31), a computational control block (32), and a communication control block (33), communication control being performed independently of computation control, the computational controller (32) being configured to control the computational operations performed by the unitary computational elements, as well as read and write operations of the associated local memories, and the communication controller (33) being configured to manage data transfers between a global memory (3) and the local memories (13), as well as data transfers between the processing blocks (10).

4. Processing method according to one of the preceding claims, wherein a unitary block (10) performs a transmission of a type selected from broadcast and multicast as a function of a header of the packet to be transmitted, and wherein the unitary block applies at least one of said following rules:

for a packet to be transmitted in broadcast originating from a neighboring unitary block (10) located in a given direction relative to said block that is to perform the transmission, said block transmits the packet during one cycle in all directions except the direction of said neighboring block;

for a packet to be transmitted in multicast: if the packet originates from the PE of the unitary block, the multicast implemented by the block is bidirectional according to two opposite directions; otherwise, the multicast implemented by the block is unidirectional and directed opposite the neighboring processing block from which said packet originates.

**5.** Processing method according to one of the preceding claims, wherein, in the event of at least two simultaneous transmission requests toward the same direction by a unitary block during a processing cycle, priority among said requests is arbitrated, the request having the arbitrated priority being transmitted in said direction, and the other request being stored and subsequently transmitted toward said direction during a subsequent processing cycle.

**6.** Convolutional neural network accelerator comprising an array (2) of unitary processing blocks (10) and a clock, each unitary processing block (11) comprising a router (12) and a unitary computational element PE (11) associated with a set (13) of respective local memories, the unitary computational element being configured to perform computational operations selected from multiplications and accumulations on data stored in its local memories, the router being configured to perform a plurality of independent data routings in parallel toward distinct outputs of the router,

wherein the same unitary processing block (10) of the array is configured, during a same processing cycle clocked by the clock of the accelerator, to:

- receive and/or transmit, through the router of the unitary block, first and second data from or to neighboring unitary blocks in the array according to first and second directions selected, on the basis of said data, from among at least the vertical and horizontal directions in the array;
- perform one of said computational operations in relation to data stored in its set of local memories during at least one previous processing cycle.

**7.** Convolutional neural network accelerator (1) according to the preceding claim, wherein said router comprises a parallel routing control block (120), a parallel arbiter block (121), a parallel switch block (122), and a parallel input buffer block (123), the router being capable of receiving and processing different data communication requests in parallel.

**8.** Convolutional neural network accelerator (1) according to claim 6 or 7, comprising a global control block (31), a computational control block (32), and a communication control block (33), communication control being performed independently of computational control, the computational controller (32) being configured to control the computational operations performed by the unitary computational elements, as well as read and write operations of the associated local memories, and the communication controller (33) being configured to manage data transfers between a global memory (3) and the local memories (13), as well as data transfers between the processing blocks (10).

**9.** Convolutional neural network accelerator (1) according to one of claims 6 to 8, wherein a unitary block (10) is configured to perform a transmission of a type selected from broadcast and multicast as a function of a header of the packet to be transmitted, and the unitary block (10) is configured to apply at least one of the following rules:

for a packet to be transmitted in broadcast originating from a neighboring block 10 located in a given direction relative to said block that is to perform the transmission, said block transmits the packet during one cycle in all directions except the direction of said neighboring block;

for a packet to be transmitted in multicast: if the packet originates from the PE of the unitary block, the multicast implemented by the block is bidirectional according to two opposite directions; otherwise, the multicast implemented by the block is unidirectional and directed opposite the neighboring processing block from which said packet originates.

**10.** Convolutional neural network accelerator (1) according to one of claims 6 to 9, wherein, in the event of at least two simultaneous transmission requests toward the same direction by a unitary block (10) during a processing cycle, the routing block of the unitary block is configured to arbitrate priority among said requests, the request having the arbitrated priority being transmitted in said direction, and the other request being stored and subsequently transmitted toward said direction during a subsequent processing cycle.

FIG.1

FIG.2

**101**

Alimentation parallèle du réseau par les poids de filtre et les données d'entrée

**102**

- Diffusion parallèle des poids de filtre et les données d'entrée
- Recouvrement des communications par le calcul

**103**

- Transfert parallèle des Psum
- Accumulation des Psum

**100**

# FIG.3

32-bit

4-bit →

| Flit code | Addr_dest_i | Addr_dest_j |
|-----------|-------------|-------------|
| Flit code | Data payload | |

(b) Unicast

32-bit

4-bit →

| Flit code | Addr_dest_i | Addr_dest_j |
|-----------|-------------|-------------|
| Flit code | Data payload | |

(a) Multicast et Broadcast

32-bit

4-bit →

| Flit code | - |
|-----------|---|
| Flit code | Data payload |

(c) Accès mémoire

| Flit code | Flit type |
|-----------|-----------|
| « 0001 » | unicast |
| « 0010 » | Vertical multicast |
| « 0011 » | Horizontal multicast |
| « 0100 » | Diagonal multicast |
| « 0110 » | Broadcast |
| « 0111 » | Data payload |
| « 1000 » | Accès Nord à la mémoire de données de sortie |

(d) Encodage binaire des types de flit

FIG.4

FIG.5

FIG.6

FIG.7

FIG.8

EP 4 250 182 B1

FIG.9

FIG.10

FIG.11

EP 4 250 182 B1

103

| Out$_{row\ 0}$ | Out$_{row\ 1}$ | Out$_{row\ 2}$ | Out$_{row\ 3}$ |

PE$_{00}$ + psum$_{00}$   PE$_{01}$ + psum$_{01}$   PE$_{02}$ + psum$_{02}$   PE$_{03}$ + psum$_{03}$

PE$_{10}$ + psum$_{10}$   PE$_{11}$ + psum$_{11}$   PE$_{12}$ + psum$_{12}$   PE$_{13}$ + psum$_{13}$

PE$_{20}$ + psum$_{20}$   PE$_{21}$ + psum$_{21}$   PE$_{22}$ + psum$_{22}$   PE$_{23}$ + psum$_{23}$

PE$_{30}$ psum$_{30}$   PE$_{31}$ psum$_{31}$   PE$_{32}$ psum$_{32}$   PE$_{33}$ psum$_{33}$

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. LECUN et al.** Gradient-based learning applied to document recognition. *Proc. IEEE*, November 1998, vol. 86 (11), 2278-2324
- **XIAOSHANLIN et al.** NeuronLink: An Efficient Chip-to-Chip Interconnect for Large-Scale Neural Network Accelerators. *IEEE TRANSACTIONS ON VERY LARGE SCALE INTEGRATION (VLSI) SYSTEMS.*, vol. 28 (9), 1966-1978
- **Y. CHEN**. Eyeriss: An Energy-Efficient Reconfigurable Accelerator for Deep Convolutional Neural Networks. *IEEE Journal of Solid-State Circuits*, November 2017, vol. 52 (1), 127-138